# EUROPEAN PATENT APPLICATION

(11) **EP 4 471 975 A1**
(43) Date of publication of application: **04.12.2024**
(21) Application number: 23746891.3
(22) Date of filing: 23.01.2023
(51) Int. Cl.: H01M 50/595, H01M 10/04, H01M 10/0587, H01M 50/531, H01M 50/586

(54) **NONAQUEOUS ELECTROLYTE SECONDARY BATTERY**

(30) Priority: 28.01.2022 JP 2022011561
(71) Applicant: Panasonic Energy Co., Ltd., Osaka 570-8511 (JP)
(72) Inventor: MISAWA Ryoma, Moriguchi-shi, Osaka 570-8511 (JP); KOBAYASHI Kei, Moriguchi-shi, Osaka 570-8511 (JP); MIZUKOSHI Fumikazu, Moriguchi-shi, Osaka 570-8511 (JP)
(74) Representative: Eisenführ Speiser
(86) International application number: PCT/JP2023/001887
(87) International publication number: WO 2023/145679

(57) **Abstract**

According to the present invention, a cylindrical battery comprises: an electrode assembly in which a long positive electrode (11) and a long negative electrode are wound with a separator therebetween. The positive electrode (11) has a positive electrode core exposed section (33) exposed so that both surfaces of a positive electrode core body (31) overlap each other. In a first surface (11a) of the positive electrode (11), a positive electrode lead (20) is joined to the positive electrode core exposed section (33), and a first insulating tape (36) is adhered to the positive electrode core exposed section (33) so as to cover the positive electrode lead (20). In a second surface (11b) on the opposite side to the first surface (11a) of the positive electrode (11), a second insulating tape (37) is adhered to the positive electrode core body exposed section (33). The thickness of the first insulating tape (36) is greater than the thickness of the second insulating tape (37).

## Description

### TECHNICAL FIELD

The present disclosure relates to a non-aqueous electrolyte secondary battery.

### BACKGROUND ART

As a conventional non-aqueous electrolyte secondary battery, PATENT LITERATURE 1 discloses a cylindrical battery. This cylindrical battery comprises an electrode assembly having a positive electrode and a negative electrode wound via separators. The positive electrode has a positive electrode core and positive electrode mixture layers provided on both surfaces of the positive electrode core, and the negative electrode has a negative electrode core and negative electrode mixture layers provided on both surfaces of the negative electrode core. The positive electrode has a positive electrode core exposed portion that the positive electrode core is exposed from, and a positive electrode lead is joined to the positive electrode core exposed portion. The positive electrode lead is covered by an insulating tape pasted on a first surface of the joined positive electrode, and a place that is opposite to the positive electrode lead and on a second surface of the positive electrode is also covered by an insulating tape. Likewise, the negative electrode has a negative electrode core exposed portion that the negative electrode core is exposed from, and a negative electrode lead is joined to the negative electrode core exposed portion. The negative electrode lead is covered by an insulating tape pasted on a first surface of the joined negative electrode, and a place that is opposite to the negative electrode lead and on a second surface of the negative electrode is also covered by an insulating tape. This cylindrical battery securely prevents internal short circuit by covering, with the insulating tapes, both surfaces of the longitudinal places that the leads for the positive electrode and the negative electrode are joined to.

### CITATION LIST

### PATENT LITERATURE

PATENT LITERATURE 1: Japanese Unexamined Patent Application Publication No. 2004-311282

### SUMMARY

In recent years, packing electrode plates in high density, use of novel negative electrode active materials such as Si materials that are alloyed with Li, and the like allow high capacity of a battery, which situation causes an increasing pressure inside the electrode assembly. In such situations, in the case where the insulating tapes are small in thickness, when impact is exerted on the battery due to dropping or the like or the electrode assembly is mixed with a foreign object, there is concern that any of the insulating tapes is damaged due to excessive stress arising near a corner of the electrode lead and the battery makes internal short circuit. Conversely, in the case where the insulating tapes are large in thickness, a vacant space in the electrode assembly decreases, a pressure inside the electrode assembly rises, and hence, when impact is exerted on the battery due to dropping or the like or the electrode assembly is mixed with a foreign object, there is concern that the separator is damaged and the battery makes internal short circuit. It is therefore an advantage of the present disclosure to provide a non-aqueous electrolyte secondary battery capable of restraining occurrence of internal short circuit even when impact is exerted on the battery due to dropping or the like or the electrode assembly is mixed with a foreign object.

In order to solve the aforementioned problem, there is provided a non-aqueous electrolyte secondary battery according to the present disclosure, comprising an electrode assembly in which a first electrode including a long strip-shaped first electrode core and first electrode mixture layers provided on both surfaces of the first electrode core and a second electrode including a long strip-shaped second electrode core and second electrode mixture layers provided on both surfaces of the second electrode core are wound via a separator, wherein the first electrode has a first electrode core exposed portion that both surfaces of the first electrode core are exposed from, on a first surface of the first electrode, a first electrode lead is joined to the first electrode core exposed portion and a first insulating tape is pasted on the first electrode core exposed portion so as to cover the first electrode lead, on a second surface on an opposite side to the first surface of the first electrode, a second insulating tape is pasted on the first electrode core exposed portion, and a thickness of the first insulating tape is larger than a thickness of the second insulating tape.

According to the non-aqueous electrolyte secondary battery according to the present disclosure, occurrence of internal short circuit can be restrained even when impact is exerted on the battery due to dropping or the like or an electrode assembly is mixed with a foreign object.

### BRIEF DESCRIPTION OF DRAWINGS

FIG. 1 is an axial sectional view of a cylindrical battery according to an embodiment of the present disclosure.
FIG. 2 is a perspective view of an electrode assembly of the cylindrical battery.
FIG. 3A is a schematic sectional view including a longitudinal direction and a thickness direction with a positive electrode expanded into a long strip shape.
FIG. 3B is a plan view of a joint portion and its periphery of a positive electrode lead on the positive electrode as viewed from the positive electrode lead side.
FIG. 4A is a schematic sectional view including the longitudinal direction and the thickness direction with a negative electrode expanded into a long strip shape.
FIG. 4B is a plan view of a joint portion and its periphery of a negative electrode lead on the negative electrode as viewed from the negative electrode lead side.
FIG. 5 is a diagram for explaining a compression test.
FIG. 6 is a diagram showing positional relationship between a pressor and a test unit in the compression test.

### DESCRIPTION OF EMBODIMENTS

Hereafter, embodiments of a non-aqueous electrolyte secondary battery according to the present disclosure will be described in detail with reference to the drawings. The non-aqueous electrolyte secondary battery of the present disclosure only has to have a winding-type electrode assembly, and may be a cylindrical battery, a rectangular battery, or a pouch-type battery. While, for a non-aqueous electrolyte secondary battery as an embodiment, a cylindrical battery 10 as a lithium ion battery is hereafter exemplarily illustrated, the non-aqueous electrolyte secondary battery according to the present disclosure is not limited to this. Moreover, while in the following description, first to fourth insulating tapes 36, 37, 46, and 47 can be formed, for example, of tapes each having a base material composed of a polyimide film and a pressure-sensitive adhesive material formed of silicon, they may be formed of any material(s) as long as they are tapes that have insulation ability and can be pasted.

It is originally supposed to combine properly characteristic portions of the embodiments and the modifications hereafter described to construct a new embodiment. In the embodiments below, the same configurations in the drawings are given the same signs, and their duplicate description is omitted. Moreover, the drawings include some schematic diagrams, and proportions of dimensions such as lengths, widths, and depths of components do not necessarily coincide with one another between different drawings. In the present specification, a sealing assembly 17 side of the cylindrical battery 10 in the axial direction (height direction) is regarded as being on the "upside", and a bottom 55 side of an exterior can 16 in the axial direction is regarded as being on the "downside". Moreover, among the constituent components described below, constituent components that are not disclosed in the independent claim indicating the highest concept are optional constituent components, not the essential constituent components.

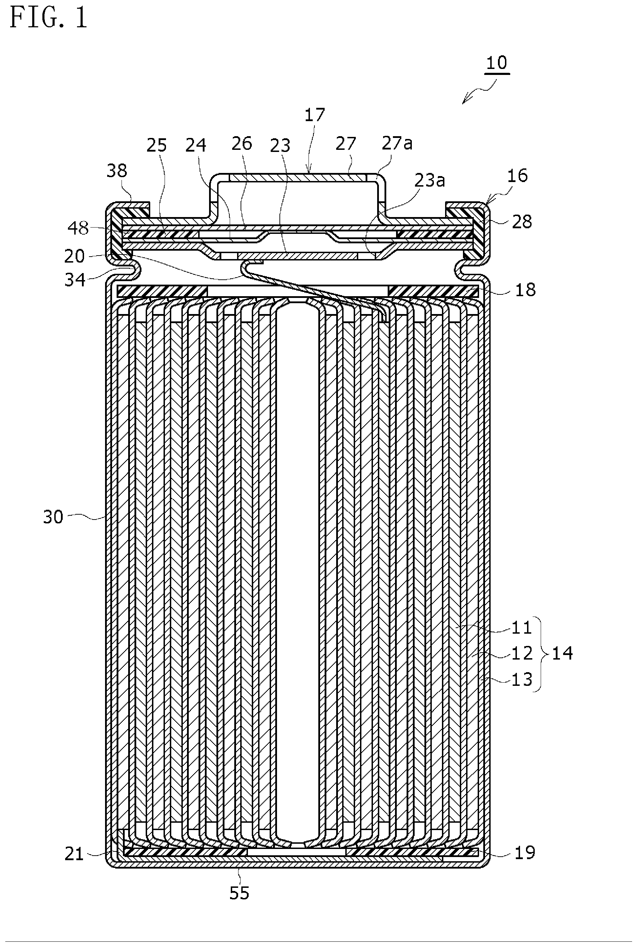

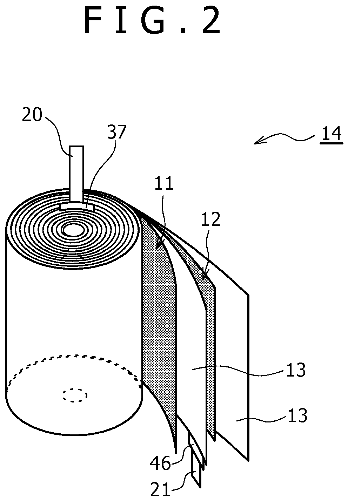

FIG. 1 is an axial sectional view of the cylindrical battery 10 according to the present disclosure, and FIG. 2 is a perspective view of an electrode assembly 14 of the cylindrical battery 10. As shown in FIG. 1, the cylindrical battery 10 comprises the winding-type electrode assembly 14, a non-aqueous electrolyte (not shown), the bottomed tubular metal-made exterior can 16 housing the electrode assembly 14 and the non-aqueous electrolyte, and the sealing assembly 17 closing an opening of the exterior can 16. As shown in FIG. 2, the electrode assembly 14 has a winding structure having a long strip-shaped positive electrode 11 and a long strip-shaped negative electrode 12 wound via two long strip-shaped separators 13.

In order to prevent precipitation of lithium, the negative electrode 12 is formed to be larger by a certain size than the positive electrode 11. Namely, the negative electrode 12 is formed to be longer than the positive electrode 11 in a longitudinal direction and a width direction (transverse direction). Moreover, the two separators 13 are formed at least to be larger by a certain size than the positive electrode 11 and, for example, are arranged such that the positive electrode 11 is interposed therebetween. The negative electrode 12 may constitute a winding starting end of the electrode assembly 14. Nevertheless, the separators 13 generally extend beyond an end of the negative electrode 12 on the winding starting side, and ends of the separators 13 on the winding starting side constitute the winding starting end of the electrode assembly 14.

The non-aqueous electrolyte includes a non-aqueous solvent and an electrolyte salt dissolved in the non-aqueous solvent. For the non-aqueous solvent, for example, there may be used esters, ethers, nitriles, amides, a mixed solvent of two kinds or more of these, and the like. The non-aqueous solvent may contain a halogen-substituted substance having halogen atom(s) such as fluorine substituted for at least part of hydrogen atoms of these solvents. Notably, the non-aqueous electrolyte is not limited to a liquid electrolyte and may be a solid electrolyte using a gelatinous polymer or the like. For the electrolyte salt, a lithium salt such as LiPF₆ is used.

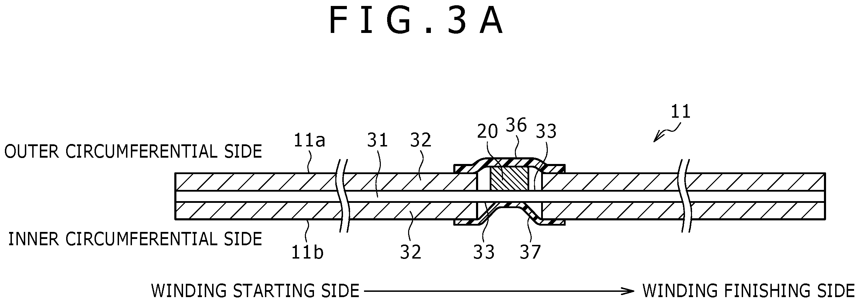

FIG. 3A is a schematic sectional view including a longitudinal direction and a thickness direction with the positive electrode 11 expanded into a long strip shape. As shown in FIG. 3A, the positive electrode 11 has a long strip-shaped positive electrode core 31 as a first electrode core and positive electrode mixture layers 32 formed on both surfaces of the positive electrode core 31. For the positive electrode core 31, there can be used foil of a metal, such as aluminum or aluminum alloy, that is stable in the potential range of the positive electrode 11, a film having the metal disposed in the surface layer, and the like. The positive electrode mixture layers 32 include a positive electrode active material, a conductive agent, and a binder agent. The positive electrode 11 can be produced, for example, by applying positive electrode mixture slurry including the positive electrode active material, the conductive agent, the binder agent, and the like on the positive electrode core 31, drying the coating film and afterward compressing it to form the positive electrode mixture layers 32 on both surfaces of the positive electrode core 31.

The positive electrode active material is composed of a lithium-containing metal composite oxide as a main component. Examples of a metal element contained in the lithium-containing metal composite oxide include Ni, Co, Mn, Al, B, Mg, Ti, V, Cr, Fe, Cu, Zn, Ga, Sr, Zr, Nb, In, Sn, Ta, W, and the like. A preferable example of the lithium-containing metal composite oxide is a composite oxide containing at least one of the group consisting of Ni, Co, Mn, and Al.

Examples of the conductive agent included in the positive electrode mixture layers 32 can include carbon materials such as carbon black, acetylene black, Ketjen black, and graphite. Examples of the binder agent included in the positive electrode mixture layers can include fluorine resins such as polytetrafluoroethylene (PTFE) and polyvinylidene fluoride (PVdF), polyacrylonitrile (PAN), polyimide resins, acrylic resins, polyolefin resins, and the like. There may be used, together with these resins, cellulose derivatives such as carboxymethylcellulose (CMC) or its salt, polyethylene oxide (PEO), and the like.

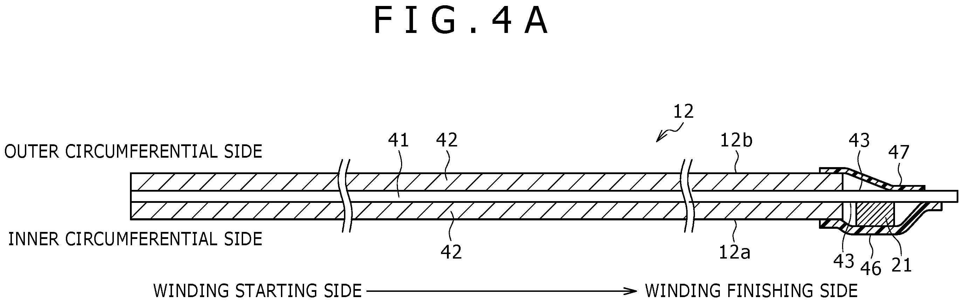

FIG. 4A is a schematic sectional view including the longitudinal direction and the thickness direction with the negative electrode 12 expanded into a long strip shape. As shown in FIG. 4A, the negative electrode 12 has a long strip-shaped negative electrode core 41 as a second electrode core and negative electrode mixture layers 42 formed on both surfaces of the negative electrode core 41. For the negative electrode core 41, there can be used foil of a metal, such as copper or copper alloy, that is stable in the potential range of the negative electrode 12, a film having the metal disposed in the surface layer, and the like. The negative electrode mixture layers 42 include a negative electrode active material and a binder agent. The negative electrode 12 can be produced, for example, by applying negative electrode mixture slurry including the negative electrode active material, the binder agent, and the like on the negative electrode core 41, drying the coating film and afterward compressing it to form the negative electrode mixture layers 42 on both surfaces of the negative electrode core 41.

For the negative electrode active material, there is generally used a carbon material that reversibly stores and releases lithium ions. Preferable examples of the carbon material include graphite such as natural graphite such as flaky graphite, massive graphite, and earthy graphite, and artificial graphite such as massive artificial graphite and graphitized mesophase carbon microbeads. The negative electrode mixture layers 42 may include, as the negative electrode active material, a Si material containing silicon (Si). Moreover, for the negative electrode active material, there may be used a metal, other than Si, that is alloyed with lithium, an alloy containing the metal, a compound containing the metal, and the like.

While, for the binder agent included in the negative electrode mixture layers 42, fluorine resins, PAN, polyimide resins, acrylic resins, polyolefin resins, and the like may be used as in the case of the positive electrode 11, there is preferably used styrene-butadiene rubber (SBR) or its modified substance. In the negative electrode mixture layers 42, for example, in addition to SBR or the like, there may be included CMC or its salt, polyacrylic acid (PAA) or its salt, polyvinyl alcohol, or the like.

For the separators 13, there are used porous sheets having ion permeability and insulation ability. Specific examples of the porous sheet include a microporous thin film, woven fabric, nonwoven fabric, and the like. For the material of the separators 13, there are preferably employed polyolefin resins such as polyethylene and polypropylene, cellulose, and the like. Each separator 13 may take any of a single layer structure and a stacked structure. A heat resistant layer and/or the like may be formed on a surface of the separator 13.

As shown in FIG. 1, a positive electrode lead 20 is joined to the positive electrode 11, and a negative electrode lead 21 is joined to a winding finishing side of the negative electrode 12 in the longitudinal direction. The cylindrical battery 10 has an insulating plate 18 on the upside of the electrode assembly 14 and an insulating plate 19 on the downside of the electrode assembly 14. The positive electrode lead 20 extends to the sealing assembly 17 side through a through hole of the insulating plate 18, and the negative electrode lead 21 extends to the bottom 55 side of the exterior can 16 through the outside of the insulating plate 19. The positive electrode lead 20 is connected to a lower surface of a bottom plate 23 of the sealing assembly 17 by welding or the like. A terminal cap 27 constituting a top plate of the sealing assembly 17 is electrically connected to the bottom plate 23, and the terminal cap 27 works as a positive electrode terminal. Moreover, the negative electrode lead 21 is connected to an inner surface of the bottom 55 of the metal-made exterior can 16 by welding or the like, and the exterior can 16 works as a negative electrode terminal.

In the example shown in FIG. 1 and FIG. 2, the positive electrode lead 20 is electrically connected to an intermediate portion such as a center portion of the positive electrode core in a winding direction, and the negative electrode lead 21 is electrically connected to an end of the negative electrode core on the winding finishing side in the winding direction. Nevertheless, the negative electrode lead may be electrically connected to an end of the negative electrode core on a winding starting side in the winding direction. Otherwise, the electrode assembly may have two negative electrode leads, one of the negative electrode leads may be electrically connected to the end of the negative electrode core on the winding starting side in the winding direction, and the other of the negative electrode leads may be electrically connected to the end of the negative electrode core on the winding finishing side in the winding direction. Otherwise, the negative electrode and the exterior can may be electrically connected by bringing the end of the negative electrode core on the winding finishing side in the winding direction into contact with the inner surface of the exterior can.

The cylindrical battery 10 further comprises a resin-made gasket 28 arranged between the exterior can 16 and the sealing assembly 17. The sealing assembly 17 is crimped and fixed to the opening of the exterior can 16 via the gasket 28. Thereby, the inner space of the cylindrical battery 10 is hermetically sealed. The gasket 28 is pinched and held by the exterior can 16 and the sealing assembly 17 and insulates the sealing assembly 17 from the exterior can 16. The gasket 28 has a role as a sealing material that keeps gastightness inside the battery and a role as an insulating material that insulates the exterior can 16 and the sealing assembly 17 from each other.

The exterior can 16 houses the electrode assembly 14 and the non-aqueous electrolyte, and has a shoulder 38, a grooved portion 34, a tubular portion 30, and the bottom 55. The grooved portion 34 can be formed, for example, by performing spinning processing on a part of the side wall of the exterior can 16 inward in a radial direction to recess it into an annular shape inward in the radial direction. The shoulder 38 is formed, when the sealing assembly 17 is crimped and fixed to the exterior can 16, by folding an upper end of the exterior can 16 inward toward a peripheral edge 48 of the sealing assembly 17.

The sealing assembly 17 has a structure in which the bottom plate 23, a lower vent member 24, an insulating member 25, an upper vent member 26, and the terminal cap 27 are stacked in the order from the electrode assembly 14 side. Each of the members constituting the sealing assembly 17 has a disc shape or a ring shape, for example, and the members except the insulating member 25 are electrically connected to one another. The bottom plate 23 has at least one through hole 23a. Moreover, the lower vent member 24 and the upper vent member 26 are connected at their center portions, and between their peripheral edges, the insulating member 25 is interposed.

When abnormal heat generation of the cylindrical battery 10 occurs and an internal pressure of the cylindrical battery 10 rises, the lower vent member 24 deforms so as to push the upper vent member 26 upward to the terminal cap 27 side and ruptures, and a current path between the lower vent member 24 and the upper vent member 26 is disconnected. When the internal pressure further rises, the upper vent member 26 ruptures and gas is discharged from a through hole 27a of the terminal cap 27. This discharge of the gas can prevent the internal pressure of the cylindrical battery 10 from excessively rising and the cylindrical battery 10 from blowing up, and safety of the cylindrical battery 10 can be enhanced.

As shown in FIG. 3A, the positive electrode 11 has the long strip-shaped positive electrode core 31 and the positive electrode mixture layers 32 formed on both surfaces of the positive electrode core 31. The positive electrode 11 has a positive electrode core exposed portion 33 that both surfaces of the positive electrode core 31 are exposed from. The positive electrode core exposed portion 33 constitutes a first electrode core exposed portion.

On a first surface 11a of the positive electrode 11, the positive electrode lead 20 is joined to the positive electrode core exposed portion 33. The positive electrode mixture layers 32 are present on both sides of the positive electrode core exposed portion 33 in the longitudinal direction. On the first surface 1 1a of the positive electrode 11, the first insulating tape 36 is pasted on the positive electrode core exposed portion 33 so as to cover the positive electrode lead 20. Moreover, on a second surface 11b of the positive electrode 11, the second insulating tape 37 is pasted on the positive electrode core exposed portion 33.

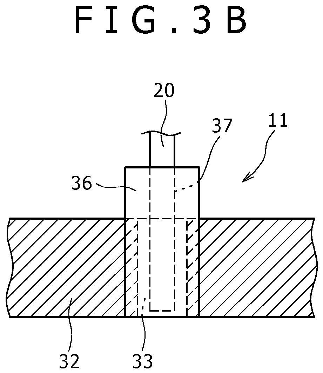

FIG. 3B is a plan view of a joint portion and its periphery of the positive electrode lead 20 on the positive electrode 11 as viewed from the positive electrode lead 20 side. As shown in FIG. 3B, the first and second insulating tapes 36 and 37 cover the entirety of a facing portion in which the positive electrode lead 20 faces the positive electrode 11 and also cover a part of a protrusion, of the positive electrode lead 20, that protrudes from the positive electrode 11. As shown in FIG. 3A, a thickness of the first insulating tape 36 is larger than a thickness of the second insulating tape 37. The thickness of the first insulating tape 36 is preferably greater than or equal to 1.2 times the thickness of the second insulating tape 37. Moreover, the thickness of the first insulating tape 36 is preferably less than or equal to 3 times the thickness of the second insulating tape 37. Notably, while in the example shown in FIG. 3A, the positive electrode lead 20 is joined to the surface of the positive electrode core 31 on the outer winding side, the positive electrode lead 20 may be joined to the surface of the positive electrode core 31 on the inner winding side.

As shown in FIG. 4A, the negative electrode 12 has the long strip-shaped negative electrode core 41 and the negative electrode mixture layers 42 formed on both surfaces of the negative electrode core 41. The negative electrode 12 has a negative electrode core exposed portion 43 that both surfaces of the negative electrode core 41 are exposed from at the end of the winding finishing side in the longitudinal direction. On a first surface 12a of the negative electrode 12, the negative electrode lead 21 is joined to the negative electrode core exposed portion 43. The negative electrode core exposed portion 43 constitutes a second electrode core exposed portion. On the first surface 12a of the negative electrode 12, the third insulating tape 46 is pasted on the negative electrode core exposed portion 43 and the negative electrode mixture layer 42 so as to cover the negative electrode lead 21. Moreover, on a second surface 12b of the negative electrode 12, the fourth insulating tape 47 is pasted on the negative electrode core exposed portion 43 and the negative electrode mixture layer 42.

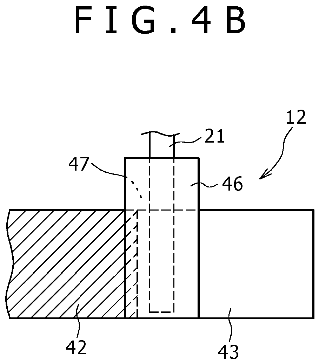

FIG. 4B is a plan view of a joint portion and its periphery of the negative electrode lead 21 on the negative electrode 12 as viewed from the negative electrode lead 21 side. As shown in FIG. 4B, the third and fourth insulating tapes 46 and 47 cover the entirety of a facing portion in which the negative electrode lead 21 faces the negative electrode 12 and also cover a part of a protrusion, of the negative electrode lead 21, that protrudes from the negative electrode 12. As shown in FIG. 4A, a thickness of the third insulating tape 46 is larger than a thickness of the fourth insulating tape 47. The thickness of the third insulating tape 46 is preferably greater than or equal to 1.2 times the thickness of the fourth insulating tape 47. Moreover, the thickness of the third insulating tape 46 is preferably less than or equal to 3 times the thickness of the fourth insulating tape 46. Notably, while in the example shown in FIG. 4A, the negative electrode lead 21 is joined to the surface of the negative electrode core 41 on the inner winding side, the negative electrode lead 21 may be joined to the surface of the negative electrode core 41 on the outer winding side.

### (Production of Test Units)

Test units used for compression tests mentioned later were produced as follows.

### <Experimental Example 1>

An Al-made positive electrode lead was attached onto a positive electrode core piece composed of Al foil, and polyimide-made insulating tapes were pasted on both surfaces of the positive electrode core piece so as to overlap with the positive electrode lead thereby to produce a positive electrode piece. A total thickness of the two insulating tapes was set to 36 µm, and thicknesses of the insulating tapes on the positive electrode lead side and the non-positive electrode lead side were determined such that a ratio in thickness of the insulating tapes on the positive electrode lead side and the non-positive electrode lead side was 1.2:1. Thicknesses of the Al foil and the positive electrode lead were set to 15 µm and 150 µm, respectively. Next, using a mixture of 95 pts. mass of graphite powder and 5 pts. mass of silicon oxide as the negative electrode active material, 1 pt. mass of styrene-butadiene rubber as the binder agent and 1 pt. mass of carboxymethylcellulose as the thickener agent were added, and dispersed in water thereby to produce the negative electrode slurry. The produced negative electrode slurry was applied on both surfaces of Cu foil as negative electrode current collector foil, and after being dried, rolled by rollers to produce a negative electrode piece having a thickness of 150 µm. A separator with a thickness of 13.5 µm composed of a polyethylene microporous film was interposed between the produced positive electrode piece and negative electrode piece to afford a test unit according to Experimental Example 1.

### <Experimental Example 2>

A test unit was produced as with Experimental Example 1 except that the ratio in thickness of the insulating tapes of the positive electrode piece was set to 1.5:1 on the positive electrode lead side and the non-positive electrode lead side.

### <Test Piece 3>

A test unit was produced as with Experimental Example 1 except that the ratio in thickness of the insulating tapes of the positive electrode piece was set to 1.8:1 on the positive electrode lead side and the non-positive electrode lead side.

### <Experimental Example 4>

A test unit was produced as with Experimental Example 1 except that the ration in thickness of the insulating tapes of the positive electrode piece was set to 2:1 on the positive electrode lead side and the non-positive electrode lead side.

### <Experimental Example 5>

A test unit was produced as with Experimental Example 1 except that the ratio in thickness of the insulating tapes of the positive electrode piece was set to 1:1 on the positive electrode lead side and the non-positive electrode lead side and the total thickness of the two insulating tapes was set to 25 µm.

### <Experimental Example 6>

A test unit was produced as with Experimental Example 1 except that the ratio in thickness of the insulating tapes of the positive electrode piece was set to 1: 1 on the positive electrode lead side and the non-positive electrode lead side.

### <Experimental Example 7>

A test unit was produced as with Experimental Example 1 except that the ratio in thickness of the insulating tapes of the positive electrode piece was set to 1: 1 on the positive electrode lead side and the non-positive electrode lead side and the total thickness of the two insulating tapes was set to 48 µm.

### (Compression Test)

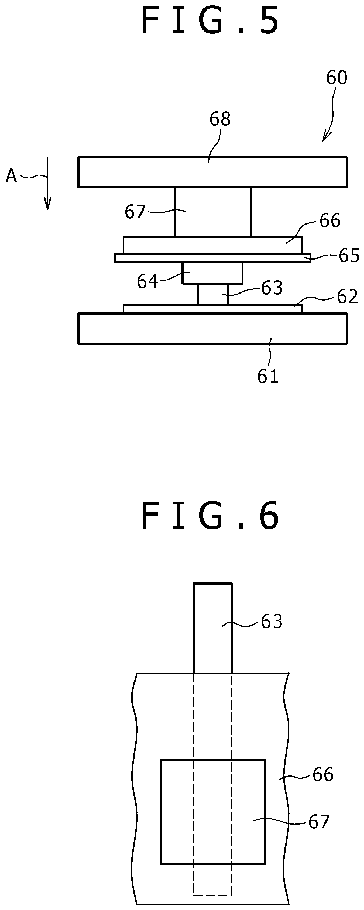

For each of the test units of Experimental Examples 1 to 7, there were measured a film breakage pressure of the insulating tapes and a contact pressure at the positive electrode lead portion by a compression test machine. In the test, as shown in FIG. 5, there were sequentially arranged to overlap the positive electrode piece composed of a positive electrode core piece 62, a positive electrode lead 63, and an insulating tape 64, a separator piece 65, and a negative electrode piece 66 on a mounting table 61 of a compression test machine 60. Then, a moving plate 68 constituted of a flat plate was moved toward the mounting table 61 side to one side in the thickness direction indicated by the arrow A to move a pressor 67 toward the mounting table 61 side in the thickness direction, thereby, the test unit was pressed downward, and at the time point when the positive electrode piece and the negative electrode piece made short circuit, the film breakage pressure exerted on the test unit was measured. An electric resistance was being measured in real time between the positive electrode lead 63 and a lead (not shown) joined to the negative electrode piece 66, and at the time point when the resistance value drastically dropped, the short circuit was determined to occur. There was set to the film breakage pressure the pressure at the time point when the resistance value drastically dropped. Moreover, the contact pressure was set as a pressure exerted on the test unit when the pressor 67 had been moved toward the mounting table 61 side until the total thickness of the test unit held between the mounting table 61 and the pressor 67 became 330 µm. Notably, for a test unit that did not make short circuit at the time point when the contact pressure was measured, the pressor 67 was further moved toward the mounting table 61 side to measure the film breakage pressure. In all the tests, as shown in FIG. 6, the test was performed such that a center portion of the positive electrode lead 63 overlapped with the center of the pressor 67 with respect to the thickness direction. Table 1 presents the test results.

**[Table 1]**

| | Ratio in Thickness of Insulating Tapes | | Total Thickness of Insulating Tapes (µm) | Film Breakage Pressure (MPa) | Contact Pressure (MPa) |
|---|---|---|---|---|---|
| | Lead Side | Non-Lead Side | | | |
| Experimental Example 1 | 1.2 | 1 | 36 | 61 | 60 |
| Experimental Example 2 | 1.5 | 1 | 36 | 65 | 60 |
| Experimental Example 3 | 1.8 | 1 | 36 | 67 | 60 |
| Experimental Example 4 | 2 | 1 | 36 | 69 | 60 |
| Experimental Example 5 | 1 | 1 | 25 | 49 | 49 |
| Experimental Example 6 | 1 | 1 | 36 | 58 | 60 |
| Experimental Example 7 | 1 | 1 | 48 | 69 | 70 |

For Experimental Examples 5 to 7, all the ratios in thickness of the insulating tapes on the lead side and the non-lead side are 1:1, and the total thicknesses of the insulating tapes are different. Along with a merit of improving film breakage resistance of the insulating tapes and the separator on the positive electrode lead when the insulating tapes are made large in thickness on both sides of the lead side and the non-lead side, there also arises a demerit of increase of the contact pressure exerted on the positive electrode lead caused by the total thickness of the insulating tapes. The contact pressure in these compression tests becomes an index of the pressure exerted on the positive electrode lead inside the battery. Namely, as indicated in Experimental Examples 5 to 7, the result that the contact pressure is greater than or equal to the film breakage pressure implies that an increase of the pressure exerted on the positive electrode lead increases film breakage risks of the insulating tapes and the separator. Therefore, merely increasing the total thickness of the insulating tapes as in Experimental Example 7 cannot sufficiently restrain internal short circuit.

On the other hand, in Experimental Examples 1 to 4, while the total thickness of the insulating tapes is the same as in Experimental Example 6, the film breakage pressure is larger than the contact pressure. Namely, the results of Experimental Examples 1 to 4 imply that reducing the pressure exerted on the positive electrode lead reduces the film breakage risks of the insulating tapes and the separator. From the aforementioned results, making the insulating tapes thick on the lead side and thin on the non-lead side can improve film breakage resistance of the insulating tapes while restraining increase in pressure exerted on the positive electrode lead caused by the total thickness of the insulating tapes.

### [Operation and Effects of Cylindrical Battery 10]

According to the cylindrical battery 10, since the thickness of the first insulating tape 36 is made larger than the thickness of the second insulating tape 37, even when impact is exerted on the battery due to dropping or the like or the electrode assembly is mixed with a foreign object, the first insulating tape 36 can be restrained from being damaged caused by the positive electrode lead 20. Furthermore, since the thickness of the second insulating tape 37 is made smaller than the thickness of the first insulating tape 36, the total thickness of the first insulating tape 36 and the second insulating tape 37 can be reduced. Accordingly, since the pressure exerted between the positive electrode lead 20 and the first insulating tape 36 can be reduced, even when impact is exerted on the cylindrical battery 10 or the electrode assembly 14 is mixed with a foreign object, the separator 13 can be restrained from being damaged. Therefore, internal short circuit of the cylindrical battery 10 can be effectively restrained.

Moreover, when the thickness of the first insulating tape 36 is greater than or equal to 1.2 times the thickness of the second insulating tape 37, the aforementioned results of the compression tests imply that short circuit of the cylindrical battery 10 can be more effectively restrained even when impact is exerted on the cylindrical battery 10 or the electrode assembly 14 is mixed with a foreign object. Moreover, according to the cylindrical battery 10, since the relationship in thickness between the third insulating tape 46 and the fourth insulating tape 47 is set to be similar to the relationship in thickness between the first insulating tape 36 and the second insulating tape 37, the third insulating tape 46 and/or the separator 13 can also be restrained from being damaged due to the pressure from the negative electrode lead 21 even when impact is exerted on the cylindrical battery 10 or the electrode assembly 14 is mixed with a foreign object.

### [Modifications]

The present disclosure is not limited to the aforementioned embodiment and its modifications, and various improvements and alterations may occur without departing from the scope of the matters disclosed in the claims of the present application and their equivalents. For example, in the aforementioned embodiment, the relationship in thickness between the third insulating tape 46 and the fourth insulating tape 47 protecting the negative electrode lead 21 is set to be similar to the relationship in thickness between the first insulating tape 36 and the second insulating tape 37 protecting the positive electrode lead 20. Nevertheless, for example, the thicknesses of the third insulating tape 46 and the fourth insulating tape 47 may be freely set and, for example, may be the same thickness. In other words, the aforementioned relationship in thickness may be employed only for the thicknesses of the first insulating tape 36 and the second insulating tape 37 which prevent short circuit of the positive electrode lead 20.

In the present embodiment, there has been described the case where the first electrode is the positive electrode 11 and the second electrode is the negative electrode 12. Nevertheless, the first electrode may be the negative electrode, and the second electrode may be the positive electrode. The thickness of the insulating tape on the negative electrode lead side may be larger than the thickness of the insulating tape on the non-negative electrode lead side, and preferably, the thickness of the insulating tape on the negative electrode lead side may be greater than or equal to 1.2 times the thickness of the insulating tape on the non-negative electrode lead side.

### REFERENCE SIGNS LIST

10 cylindrical battery, 11 positive electrode, 11a first surface of the positive electrode, 11b second surface of the positive electrode, 12 negative electrode, 12a first surface of the negative electrode, 12b second surface of the negative electrode, 13 separator, 14 electrode assembly, 20 positive electrode lead, 21 negative electrode lead, 31 positive electrode core, 32 positive electrode mixture layer, 33 positive electrode core exposed portion, 36 first insulating tape, 37 second insulating tape, 41 negative electrode core, 42 negative electrode mixture layer, 43 negative electrode core exposed portion, 46 third insulating tape, 47 fourth insulating tape, 60 compression test machine, 61 mounting table, 62 positive electrode core piece, 63 positive electrode lead, 64 insulating tape, 65 separator piece, 66 negative electrode piece, 67 pressor

## Claims

1. A non-aqueous electrolyte secondary battery, comprising
an electrode assembly in which a first electrode including a long strip-shaped first electrode core and first electrode mixture layers provided on both surfaces of the first electrode core and a second electrode including a long strip-shaped second electrode core and second electrode mixture layers provided on both surfaces of the second electrode core are wound via a separator, wherein
the first electrode has a first electrode core exposed portion that both surfaces of the first electrode core are exposed from,
on a first surface of the first electrode, a first electrode lead is joined to the first electrode core exposed portion and a first insulating tape is pasted on the first electrode core exposed portion so as to cover the first electrode lead,
on a second surface on an opposite side to the first surface of the first electrode, a second insulating tape is pasted on the first electrode core exposed portion, and
a thickness of the first insulating tape is larger than a thickness of the second insulating tape.

2. The non-aqueous electrolyte secondary battery according to claim 1, wherein
the second electrode has a second electrode core exposed portion that both surfaces of the second electrode core are exposed from so as to overlap,
on a first surface of the second electrode, a second electrode lead is joined to the second electrode starting end exposed portion and a third insulating tape is pasted on the second electrode core exposed portion so as to cover the second electrode lead,
on a second surface on an opposite side to the first surface of the second electrode, a fourth insulating tape is pasted on the second electrode core exposed portion, and
a thickness of the third insulating tape is larger than a thickness of the second insulating tape.

3. The non-aqueous electrolyte secondary battery according to claim 1 or 2, wherein the thickness of the first insulating tape is greater than or equal to 1.2 times the thickness of the second insulating tape.

4. The non-aqueous electrolyte secondary battery according to claim 2, wherein the thickness of the first insulating tape is greater than or equal to 1.2 times the thickness of the second insulating tape, and the thickness of the third insulating tape is greater than or equal to 1.2 times the thickness of the fourth insulating tape.
